Europäisches Patentamt

European Patent Office

Office européen des brevets

(11) Publication number: **0 336 721**
A2

## EUROPEAN PATENT APPLICATION

(21) Application number: 89303331.6

(22) Date of filing: 04.04.89

(51) Int. Cl.⁴: **B 29 D 31/00**
B 32 B 3/12, B 31 D 3/02

(30) Priority: 04.04.88 US 177437 18.11.88 US 272925

(43) Date of publication of application:
11.10.89 Bulletin 89/41

(84) Designated Contracting States:
BE CH DE ES FR GB IT LI LU NL SE

(71) Applicant: PLASCORE, INC. (a Michigan corporation)
615 North Fairview Street
Zeeland Michigan 49464 (US)

(72) Inventor: Huebner, Fritz
47 East Central
Zeeland Michigan 49464 (US)

(74) Representative: Robinson, Anthony John Metcalf et al
Kilburn & Strode 30 John Street
London, WC1N 2DD (GB)

(54) Method for making a thermoplastic honeycomb core.

(57) A structural honeycomb core (10;10') is fabricated of thermoplastic strips (20:50) to provide a corrosion-resistant, heat-resistant, and high-impact structure. The core includes interfused strips forming a rigid core defining hexagonal cells. In a first embodiment, the strips (20) are first bent into an engaged relationship and then fused concurrently in a heating operation. Subsequently, the strips are expanded to form the honeycomb structure. In a second embodiment, the strips (50) are corrugated prior to the assembling of the strips into a stack.

FIG. 3

EP 0 336 721 A2

Bundesdruckerei Berlin

**Description**

# METHOD FOR MAKING A THERMOPLASTIC HONEYCOMB CORE

The present invention relates to structural panels in corporating honeycomb cores and more particularly to an improved core for such panels.

A wide variety of structural panels incorporating honeycomb cores have been developed, particularly for use as aircraft components. The panels typically include an open-cell honeycomb core having thin surface sheets bonded to opposite sides thereof. The assembly results in a low-weight member capable of bearing large compression and shear forces.

The surface of face sheets are commonly made of metals or precured thermoset plastics reinforced with synthetic fibers. Typical sheet thicknesses are in the range .254 to 1.525 mm (0.010 inch to 0.060 inch). Both face sheets are typically bonded to the core using thermosetting adhesives such as epoxies. The assembled core and face sheets are placed in a heated platen press or mould where the adhesive is allowed to cure under heat and pressure. Some thermosetting plastic face sheets are simultaneously cured and bonded to the core in a single operation without the need for adhesive. The uncured plastic resin of the face sheet liquifies initially when heated and wicks up and around the cell edges of the honeycomb which provides the fillets required to attach the face sheets to the core. The amount of pressure and temperature applied depends mainly on the cure characteristics of the resin and is typically in the range of 138 to 1380 kPa (20 pounds per square inch (psi) to 200 psi) and from 93.3 to 315°C (200 degrees Fahrenheit (F) to 600 degrees F).

Metal and thermoset plastic skins are easily damaged by impact and it is therefore desirable to use materials with much better impact resistance. Such materials are available in the thermoplastic resins; however, it is difficult to adhere the cores to the surfaces of these materials--especially the most chemical and heat resistant types such as polyphenylenesulphide (PPS) and polyetheretherketone (PEEK). Consequently, these materials have not gained acceptance for structural honeycomb panels.

The honeycomb cores are fabricated of metal, plastic, and/or paper. Further, the core can be of the "foil/film/sheet", "cast", "extruded", or "heat-formed type.

Honeycomb fabrication of the "foil/film/sheet" type begins with the stacking of flat or corrugated sheets of web material on which parallel, evenly spaced, adhesive lines called "node lines" are rolled or printed on one or both faces. Cores made from these webs can be further divided into the "expandable" and "corrugated" types.

"Expandable" cores are typically made from flat sheets having node lines on only one side of each web. The sheets are placed on top of each other in such a way that the node lines of each consecutive layer will be positioned between two node lines on the layer below. The completed stack is heated and compressed until the node adhesive has cured and joined all layers. The resultant block is then sliced into smaller sections and expanded by pulling the outer-most sheets in directions generally perpendicular thereto. The sheets expand away from one another at areas between the node lines, and a hexagonal honeycomb structure is created.

The materials used in the expansion method include a wide variety of metallic foils, plastic films, paper sheets, and woven and non-woven fabrics of plastic, carbon, and glass fibres. Some cores, such as those made from fibreglass fabric and other fibrous materials, are subsequently dipped into water or solvent solutions of plastic resins in order to increase or enhance structural properties. However, the materials used in the fabrication of an expandable core must be capable of being adhesively bonded to one another. Further, relatively soft and thin-gauge materials must be used in order to facilitate expansion of the cured block, especially with limited adhesive strengths. The required expansion forces must not exceed the strength of the node adhesive or the individual layers of core material. As a further consideration, suitable materials tend to return to their relaxed state and must therefore be heated to their softening point and cooled while expanded so that the materials retain the desired hexagonal open-cell shape. The node adhesive must retain sufficient adhesive and cohesive properties to counteract the expansion forced at the required heat setting. This requirement limits the use of the expandable core to low temperature plastics with surfaces that permit bonding.

Expanded cores fabricated of metal are made mostly of thin aluminum foils of less than .152 mm (0.006 inch) thickness. The resultant cores are rather fragile and need to be handled very carefully prior to bonding. Damage to the unbonded cell walls causes the core to become prefailed, meaning that the core in the damaged area will not reach maximum strength levels. The thin foils are also very sensitive to corrosive environments, such as saltwater. Protective coatings are expensive and often of limited value.

Honeycomb cores made from thermosetting resins perform much better when exposed to corrosion. However, they are not impervious to vapour transmission and thus allow the entry of vapour into the honeycomb through the cell walls. Condensation of vapours is believed to cause the corrosion of adjoining aluminium face sheets within the laminated panels.

The "corrugated" process of honeycomb manufacture is normally used to produce products in the higher density range and to permit the use of materials that cannot be expanded as described above. In the corrugation process, a flat sheet or web is corrugated so that each sheet resembles half of the hexagon shape. Adhesive is then applied to the raised portions of the corrugated sheet; and the sheets are placed on top of each other so that all raised and coated corrugations come into contact with each other creating hexagonally shaped cells. The stacked block is then compressed and heated until the adhesive is cured to join the individual corrugated layers. The corrugated process is also used when cell shapes other than hexagons are desired, for example, to create bell-shaped cells.

The materials used in the corrugated process are typically of greater gauge and bending resistance than the materials used in the expansion process. Typical materials include stainless steel and materials with impregnating resins and binders such as fiberglass and paper. Alternative to the adhesive joining of the corrugated sheets include spot-welding and solder-dipping, which are typically used with the stainless steels.

The corrugated process is not readily susceptible to automation since the light and often flexible materials used are difficult to support and align during the stacking process. The corrugated sheets tend to nest instead of resting on opposed raised portions. Further, only limited pressure can be used to compress the adhesive films during curing or the cell pattern of the stacked sheets will be distorted. This limited pressure also requires blocks made according to this method to be typically limited in dimension.

"Cast" honeycomb core is fabricated by either 1) pouring a solvent solution of a plastic into a mould resembling a honeycomb pattern or 2) injecting a melted or liquid resin into a mould. Both methods require the material to either dry, cool, or cure inside the mould which typically causes a certain amount of shrinkage. The solid honeycomb core is therefore difficult to unmould. Mould-release provisions are therefore necessary, such as release tapers along the surfaces parallel to the honeycomb cell wall. The resultant cores have tapered cell walls and are restricted to cell diameters sufficiently large to accomodate release tapers. Present typical "cast" cell diameters are at least approximately 12.7 mm (0.5 inch).

"Extruded" honeycomb core is produced by forcing a melted plastic through an extrusion die orifice which resembles either a single honeycomb cell or multiple honeycomb cells. The extrusions are cooled, cut to the desired length, stacked, and either adhesively bonded to each other or fused by solvent cementing. The process requires plastic materials that can be either dissolved by solvents or adhered using adhesives with little bonding pressure and/or heat. The extruded materials cannot be easily modified to include fibre reinforcements into the melt stream exiting the extrusion die. The resultant cores are therefore not as strong as those created using the expanded and corrugated techniques.

The "heat-formed" honeycomb cores resemble the typical hexagonal honeycomb core structure the least. According to this method, a thermoformable plastic sheet is heated to its forming temperature and then formed into a honeycomb-like shape by simultaneously stretching the sheet in opposite directions perpendicular to its initial plane. The stretching tools are either chilled metal pins extending through the sheet or perforated platens which are adhered to the plastic sheet and pull it apart. The heat-formed method results in cores with cell walls which are not perpendicular to the cell opening and which have varying cell-wall thicknesses. These cores therefore provide only low structural properties.

To some extent, these problems are overcome by the invention described and claimed in the unpublished European Patent Application (our reference P14571EP) which we are filing simultaneously with the present application and which claims priority from the unpublished United States Application No. 07/177,437 filed April 4, 1988. According to one aspect of the invention of the said European Patent Application, a method of fabricating structural honeycomb core comprising stacking a plurality of strips one upon the other and connecting each strip to the two adjacent strips at spaced locations, the spaced locations with one of the adjacent strips alternating with the spaced locations with the other of the adjacent strips, is characterised in that the connection step is effected by welding.

The abovementioned problems are also overcome by the present invention, according to one aspect of which a method of fabricating a structural honeycomb core comprising stacking a plurality of strips, compressing the stack so that predetermined portions of the adjacent strips are forced into form abutting contact with each other, and connecting the predetermined portions together, is characterized in that the strips are of thermoplastic material and the connection is effected by heating the stack so that the abutting predetermined portions are fused together.

The invention may also be expressed in other ways as set out in the further independent claims; also additional advantages may be obtained by using the preferred features set out in the subsidiary claims.

The present invention overcomes the aforementioned problems and can provide in a simple and satisfactory manner, a honeycomb core which is corrosion-resistant, impact-resistant, and heat-resistant. The core may be fabricated from thermoplastic resins without the use of thermosetting adhesives. The core structure and method of its fabrication enable the plastic to be reinforced with synthetic, glass, or carbon fibers. More specifically, the core may be fabricated from thermoplastic sheets using either the corrugated or expanded process with the core nodes being welded together. The presently preferred crystalline thermoplastic from which the present core may be fabricated are generally well known to those having ordinary skill in the thermoplastic art. Applicant has recognized that such materials provide the desired characteristics for honeycomb panels and honeycomb cores. For example, thermoplastic cores could be melted to thermoplastic face sheets without the use of adhesive.

However, several problems, the solutions of which are incorporated into the present invention, had to be addressed prior to the use of these materials. First, bond strength using thermosetting adhesives in conjunction with crystalline thermoplastic is insufficient to allow subsequent expansion of the cores at elevated temperatures required to set the core in a rigid configuration. Second, higher heat-resistant thermoplastics cannot readily be put into solution for casting and/or solvent cementing. Third, attempts to fabricate honeycomb cores with thermoplastic materials using the cast, extruded, or heat-formed methods preclude the convenient use of fibrous reinforcement which is required to obtain higher structural properties.

After all conventional technologies for interbonding the cystalline thermoplastics proved unsuccessful, Applicant conceived that such sheets could be intersecured by fusing the sheets to one another. Fusing eliminates the use of thermosetting adhesives, solvents, and other chemical bonding agents.

Broadly, according to a preferred mode of carrying out the present invention, the thermoplastic sheets are fused together at spaced locations while the material is either in a substantially flat or corrugated shape. More specifically, each sheet or strip is laid in position on the stack and welded at spaced locations to the previous sheet. This process of laying a new sheet in place and welding it at spaced locations to the previous sheet continues until a stack of the desired thickness or number of layers is created. The stack is then heated to the softening temperature of the material and expanded in conventional fashion to create the honeycomb configuration. Cooling to lower temperature allows the expanded core to rigidify.

The resultant core is less expensive than most metallic cors and is also corrosion, chemical, and impact-resistant. Electrical properties are uniform since only one type of material is used in the assembly.

The invention may be carried into practice in various ways but two methods of fabricating structural honeycomb cores in accordance with the invention will now be described by way of example with reference to the accompanying drawings, in which:

Fig. 1 is a fragmentary perspective view of the first structural honeycomb core;

Fig. 2 is a front elevational view of the structural honeycomb core in the laying up stage of the manufacturing process;

Fig. 3 is a front elevational view of the structural honeycomb core in the compression and fusing stage of the manufacturing process; and

Fig. 4 is a front elevational view illustrating how the fusing process can be adapted to the laying up of corrugated sheets to produce another structural honeycomb core.

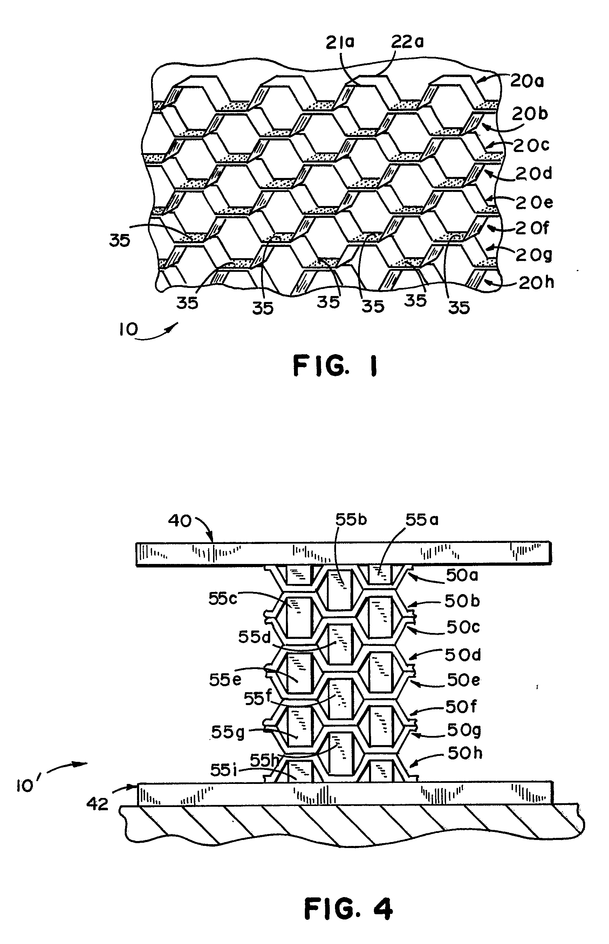

A structural honeycomb core constructed in accordance with a preferred embodiment of the invention is illustrated in Fig. 1 and generally designated 10. The core includes a plurality of layers 20 which are selectively bonded at nodes 35 and expanded to define a plurality of adjacent hexagonal cells. The appearance of the honeycomb core of the present invention is similar to the appearance of honeycomb cores generally well known in the art.

The material of which the core 10 is fabricated is a thermoplastic, such materials being generally well known to those having ordinary skill in the thermoplastic art. Suitable materials can include thermoplastic materials reinforced with fibrous materials and fillers of metal, glass, carbon, ceramic, or other plastics. The thermoplastic presently preferred is a thermoplastic sold under the trademark VICTREX PEEK by ICI Americas of Dover, Delaware and filled with a woven fibreglass fabric such as style 106 commonly available. Other suitable materials, reinforcements, and fillers will become apparent to those having ordinary skill in the thermoplastic art based upon the described manufacturing process. Generally speaking, any thermoplastic with or without reinforcement and/or filler may be used as long as sheets made from these materials can be fused to themselves at or near the melt temperature of the thermoplastic resin that encapsulates all other reinforcements and fillers.

The core is fabricated basically in five phases. The first phase is the preparation of the sheet material for subsequent fusing by means of corrugation and/or surface treatment. These steps may or may not be required, depending on whether corrugated or flat sheets are to be used and also depending upon the particular thermoplastic material selected. The second phase consists of the laying up of layers of thermoplastic sheets and complimentary spacers in a specific arrangement to form a stacked unit, and compressing the unit so that adjacent sheets are placed into form abutment with each other at predetermined node locations. The third phase includes heating the unit to a temperature at or near the melting temperature of the thermoplastic material to fuse the abutting node portions together. The fourth phase comprises cooling the stack of sheets and then expanding it into its final honeycomb shape. The fifth step then includes heating the expanded stack to the thermoplastics softening temperature to allow the resultant honeycomb structure to set in the desired configuration. Phases four and five are not required when precorrugated sheets are used.

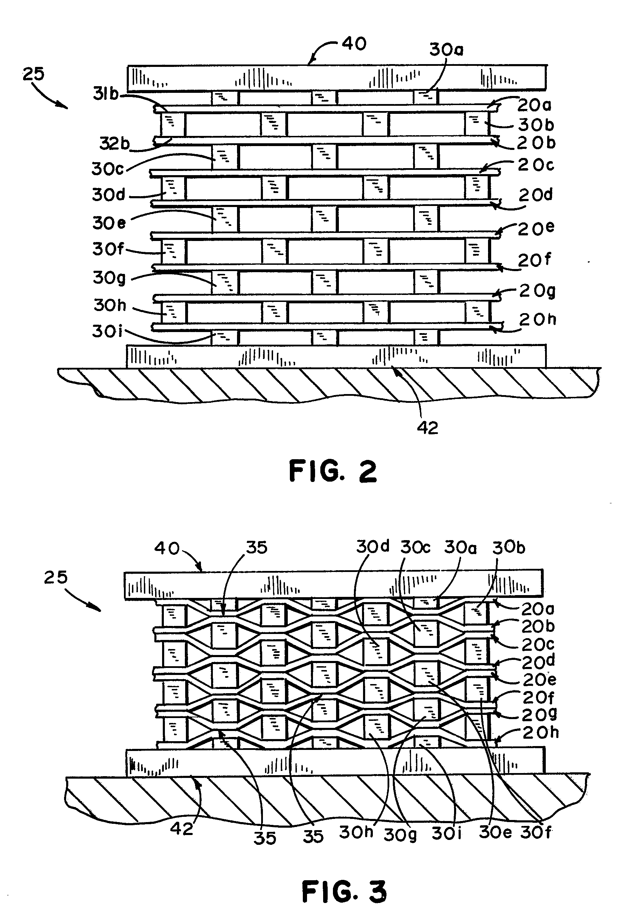

More specifically, in the manufacture of the honeycomb structure, the strips or sheets 20 preferably have generally rectangular configurations defined by lateral edges 21, 22. The lengths of the strips 20 are not critical to the present invention, and as such have been illustrated with broken ends to show indeterminate length. Following a preliminary surface treatment operation, if any, strips 20 are aligned and arranged in a superimposed manner to form a stack or unit 25 (Fig. 2). In this construction, the lateral edges 21, 22 of strips 20 are aligned with one another so that the resultant expanded core will have a relatively flat or uniform surface.

Positioned between each pair of stacked adjacent strips 20 is provided a row of spacers 30 (Fig. 2). Spacers 30 are preferably composed of a rigid metallic material, such as aluminim, but of course could be composed of any material having the requisite characteristics--such as having sufficient rigidity, a melting temperature substantially above that of the thermoplastic material and a lack of bonding affinity with the thermoplastic. The spacers 30 each have a lateral dimension defined by ends 31, 32 with equal the desired length of each of the nodes 35 and a longitudinal dimension which is at least greater than the swelled thickness of the thermoplastic strips upon heating. Preferably, spacers 30 are sized to approximately equal one-half the flat-to-flat diameter of a final expanded hexagonal cell.

In the initial assembling of the unit 25, alternating rows of spacers 30 are offset from each other, such that the spacers of one row are positioned medially between the spacers of the two adjacent rows. Furthermore, every other row of spacers will, in contrast, be aligned with each other. For example, each spacer 30c is positioned centrally between a pair of spacers 30b in one adjacent row and a pair of spacers 30d in an opposite adjacent row. Also, each spacer 30c is aligned with a directly opposed to opposite complimentary spacers 30a and 30e, each being spaced two rows from spacers 30c. Additionally, a row of spacers 30a and 30i are provided along the outersurface of each side strip 20a, 20h respectively, to ensure proper shaping of the outer strips during the compression step. As is illustrated in Figs. 2 and 3, the outer spacers 30a, 30i have a shortened length, equal to approximately one-half of the lengths of the inner spacers 30b-h, since they operate to deform only one strip 20.

Unit 25 is assembled between a pair of compressive platens 40, 42. While illustrated as including a movable platen and a fixed platen, a pair of movable platens could also be used. The application and release of the compressive forces 45 are achieved by any conventional means, such as hydraulic press assemblies. Once all of the strips 20 and spacers 30 have been positioned, platen 40 is moved towards platen 42 to compress unit 25 until the node portions 35 of adjacent strips 20 are engaged with one another. More particularly, under the compressive force the spacers 30 are moved towards one another, and in so doing effect the deformation of the strips 20. Consequently, the two strips located between each opposed pair of spacers are bent towards one another until they are firmly abutted.

For example, during the compression of unit 25, the spacers 30 are shifted so that spacers 30c are moved closer to the corresponding opposed spacers 30a and 30e. Since the interaction of spacers 30c is the same with respect to either of the spacers 30a and 30e, only the interaction between spacers 30c and 30e are discussed below. As spacers 30c are moved toward the opposed spacers 30e, the thermoplastic strips 20c, 20d positioned therebetween are also forced to move toward each other. Due to the placing of spacers 30d between strips 20c and 20d, the strips are deformed to bend about the spacers 30d and thereby form shallow corrugated configurations. The movement of the spacers 30c and 30e toward each other is continued until the portions of the strips 20c, 20d engaging the spacers 30c and 30e are in a firm abutting relationship with one another. These abutments define the nodes 35 which will be fused in the subsequent heating operation. Preferably, in the final core product each strip 20 will be approximately one-half occupied by weld nodes 35 and one-half free; although other shapes may also be formed.

Following the compression step, unit 25 along with platens 40, 42 are placed within an oven or other suitable heating means (not shown). The unit 25 is then heated to a temperature at or near its melting temperature so that the abutted strips are fused together at the nodes 35. For the preferred material VICTREX PEEK, reinforced with a plain weave glass fabric the unit 25 is heated to approximately 315°C (600°F). Due to the fibrerglass fabric reinforcement in this material, the strip segments located between the spacers 30 do not sag or undergo other deleterious deformation, despite heating the unit to the thermoplastic's melting temperature. However, such sag or distortion is likely to occur when using unreinforced thermoplastics. Consequently, the use of unreinforced thermoplastics in connection with this method would only be used for cores having applications which require only low structural properties.

After the welding procedure is completed, the unit is cooled and expanded to create the regularly shaped hexagonal open cells seen in Fig. 1. The prior cooling of the unit 25, avoids the risk of overstretching the strips 20 and thereby creating nonuniform hexagonal cells and/or nonuniform thicknesses across the length of the strips. In either instance, the structural integrity and potential strength of the core would be reduced.

After expansion is complete, the expanded core is heated to the softening temperature of the thermoplastic strips (which in the use of the preferred material is approximately 204°C (400°F)) to set the strips in the desired expanded honeycomb configuration. Depending on the material used for the strips 20, other rigidifying processes may be used. For example, it may be desirable to chemically treat the strips to create rigidity or to dip-coat the expanded core in a material which subsequently rigidifies as a coating.

The core described above can then be used in fabricating structural panels in conventional fashion. Specifically, surfacing sheets or layers (not shown) are applied to the two opposite sides of the honeycomb core structure to create a panel. The panel face sheets, if made of the same material as the core, or if fusible to the core material, could be melted to the core as well without the use of epoxies or other adhesive or bonding agents.

Fig. 4 illustrates the use of the present invention in fabricating corrugated cores 10'. In contrast to the layers of strips described above, the layers 50 are corrugated prior to assembly and arrangement between platens 40, 42. The raised areas 52 of adjacent sheets 50 are aligned with one another and fused together using the same heating techniques as described above. The spacers 55 are as high as one of the cells and are as wide as one of the cell walls (except for the outer spacers 55a, 55i which are approximately one-half as high as spacers 55b-h) to facilitate stacking and maintaining the cell shape during fusing. Also, the compression applied by platens 40, 42 may be less than that applied when using flat sheets 20, since no deformation of the sheets is involved. Rather, the compression ensures that the raised portions 52 defining the nodes of the strips 50 are all firmly abutted with one another, so that a secure fusing is attained.

The described core enables the fabrication of structural panels which are particularly well suited to high-temperature applications. The thermoplastics are relatively inexpensive as compared to metallic cores which have been previously required in high-temperature applications. Further, the described material is noncorrosive and impact-resistant.

It is also anticipated that various layers of the core could be fabricated of different thermoplastics, as long as the different thermoplastics had the capacity to fuse to each other. For example, it may be desirable to use different materials to improve electrical characteristics. For example, a core could be fabricated of alternate layers of polyetherimide (PEI) resin sold under the trademark ULTEM by General Electric Company and with alternate layers being fabricated of polyethersulsone (PES) resin sold under the trademark VICTREX PES by ICI Americas of Dover, Delaware.

The above descriptions are those of preferred embodiments of the invention. Various alterations and changescan be made without departing from the invention.

## Claims

1. A method of fabricating a structural honeycomb core (10;10') comprising stacking a plurality of strips (20;50), compressing the stack so that predetermined portions (35) of the adjacent strips are forced into firm abutting contact with each other, and connecting the predetermined portions together, characterized in that the strips are of thermoplastic material and the connection is effected by heating the stack so that the abutting predetermined portions (35) are fused together.

2. A method of fabricating a structural honeycomb core (10) comprising: superimposing a plurality of thermoplastic strips (20) having opposite lateral edges (21,22), such that the opposite lateral edges of each are aligned; placing a plurality of spacers (30) between each pair of adjacent strips thereby to form a unit with the strips; compressing the unit so that predetermined portions (35) of the adjacent strips between opposed spacers are forced into firm abutting contact with each other; heating the unit so that the abutting predetermined portions of said strips are fused together; and expanding the strips as necessary to form a honeycomb structure.

3. A method according to claim 2 in which the thermoplastic strips (20) are substantially flat prior to the compression of the unit.

4. A method according to claim 3 in which the compression of the unit bends the thermoplastic strips into a shallow corrugated pattern having a series of raised portions, wherein the raised portions are placed in abutment with corresponding raised portions of adjacent strips.

5. A method according to claim 2 or claim 3 or claim 4 in which the heating step includes heating the unit to a temperature approximately equal to the melting temperature of the thermoplastic material.

6. A method according to any of claims 2 to 5 in which the strips are composed of a reinforced thermoplastic material.

7. A method according to any of claims 2 to 6 in which the unit is cooled prior to the expansion step to thereby avoid overstretching of the strips.

8. A method according to any of claims 2 to 7 in which the unit is further heated to the softening temperature of the thermoplastic strips following the expansion thereof to set the strips in the expanded configuration.

9. A method according to any of claims 1 to 8 in which the spacers (30) are removed from the strips during the expansion step.

10. A method according to any of claims 1 to 9 in which the placing of the spacers (30) between the strips includes positioning between each strip a row of spacers having generally uniform spacings, wherein each row is offset from at least one adjacent row such that each spacer is offset from at least one spacer in an adjacent row a distance equal to approximately one-half the generally uniform spacing distance.

11. A method according to claim 10 in which each spacer (30) is aligned and opposed to at least one other spacer positioned two spacer rows away such that two spaced apart strips are located between each pair of opposed spacers.

12. A method according to claim 11 in which the compression of the unit forces each pair of opposed spacers (30) toward one another until the strips located therebetween are in a firm abutting relationship along a portion of their lengths.

13. A method according to claim 11 or claim 12 in which the compression of the unit bends each strip (20) into a shallow corrugated pattern.

14. A method according to any of claims 2 to 13 in which the thermoplastic strips (20) are substantially flat prior to said compression of said unit.

15. A method of fabricating a structural honeycomb core (10) comprising: layering a plurality of thermoplastic strips (20) into an aligned stack; applying pressure to the strips such that each strip is bent to engage at least one adjacent strip along predetermined portions (35) of its length; heating the stack so that the engaged portions are fused together; and expanding the stack as necessary to form a honeycomb structure.

16. A method according claim 15 which includes the insertion of a number of spacer elements (30) between each pair of adjacent thermoplastic strips prior to the application of pressure thereto, wherein the spacer elements cooperate with the applied pressure to effect the bending of the strips.

17. A method according to claim 15 or claim 16 in which the heating of the stack includes heating to a temperature at least near the melting temperature of the thermoplastic strips.

18. A method according to any of claims 15 to 17 in which the stack is cooled before said expansion thereof to avoid overstretching of said strips.

19. A method according to any of claims 15 to 18 in which the stack is heated to a temperature at least near its softening temperature following the expansion of the honeycomb structure to thereby set the strips in the expanded honeycomb structure.

20. A method of fabricating a structural honeycomb core (10′) comprising: superimposing a plurality of thermoplastic strips (50), each having opposite lateral edges and a plurality of raised portions (52) defining a corrugated shape, such that the raised portions of each strip abuttingly engaged corresponding raised portions of at least one adjacent strip; and heating the superimposed strips concurrently so that the abutting raised portions of the strips are fused together to form a honeycomb structure.

21. A method according to claim 20 in which the superimposed strips are compressed during the heating step to ensure that the abutting portions are firmly engaged, whereby a secure fusing of the strips together is attained.

22. A method according to claim 20 or claim 21 in which the superimposition of the strips defines a plurality of hexagonal openings, and wherein spacers (55) are placed in the said openings prior to the compression and heating of the strips thereby to hold the strips in their desired configuration.

23. A method according to claim 22 in which the spacers (50) are removed from the openings after the heating of the strips.

24. A method according to any of claims 20 to 23 in which the heating of thed strips (50) includes heating the strips to a temperature at least near the melting temperature of the thermoplastic strips.

25. A method according to any of claims 20 to 24 in which the strips (50) are composed of a reinforced thermoplastic material.

FIG. 1

FIG. 4

**FIG. 2**

**FIG. 3**